# EUROPÄISCHE PATENTSCHRIFT

(11) **EP 1 493 957 B1**
(45) Veröffentlichungstag und Bekanntmachung des Hinweises auf die Patenterteilung: **07.06.2006**
(21) Anmeldenummer: 03014803.5
(22) Anmeldetag: 30.06.2003
(51) Int. Cl.: F16L 19/00

(54) **Schraubverbindung zwischen einem Gehäuse und einem Anschlussteil**
Threaded connection between a housing and a connector element
Raccord à vis entre boîte et élément de jonction

(43) Veröffentlichungstag der Anmeldung: 05.01.2005
(73) Patentinhaber: GEBERIT TECHNIK AG, 8645 Jona (CH)
(72) Erfinder: Höfliger, Peter, 8832 Wollerau (CH); Tanner, Werner, 8713 Uerikon (CH); Rüegg, Urs, 8645 Jona (CH)
(74) Vertreter: Groner, Manfred

(56) Entgegenhaltungen:
- EP-A- 0 535 867
- EP-A- 0 903 529
- WO-A-02/061325
- FR-A- 917 287
- US-A- 5 931 508

## Beschreibung

Die Erfindung betrifft eine Schraubverbindung nach dem Oberbegriff des Anspruchs 1.

Solche Schraubverbindungen sind in der Sanitärtechnik, insbesondere zum Verbinden einer Abzweigleitung mit einer Hauptleitung bekannt. Beispielsweise zeigt die WO 02/061325 eine Verbindung, die ein axial durchströmbares Verteilergehäuse mit einer Abzweigleitung verbindet. Eine Überwurfmutter ist auf einem Aussengewinde des Abzweigestutzens aufgeschraubt und verbindet den Anschlussteil flüssigkeitsdicht mit dem Abzweigstutzen. Wird ein solche Überwurfmutter lediglich von Hand angezogen, so genügt die Handkraft in aller Regel, um die geforderte Dichtwirkung zu erreichen. Wird eine solche Überwurfmutter lediglich von Hand angezogen, besteht jedoch die Gefahr, dass sie sich löst, was zu erheblichen Bauschäden führen kann. Bei Sanitärmontagen sind solche Verbindungen vielfach schlecht zugänglich und insbesondere kann in diesen Fällen die Überwurfmutter nicht oder nur sehr umständlich mit einem Werkzeug so fest angezogen werden, dass sie sich nicht lösen kann.

Die US-A-5,931,508 offenbart eine Kupplung für eine Flüssigkeitsleitung einer Sprühvorrichtung. Die Kupplung verbindet einen Sprühkopf mit einem Schlauch. Der Sprühkopf wird aufgeschraubt und besitzt aussenseitig Rippen, zwischen die radial eine elastische Klinke so eingreift, dass zum Lösen des Sprühkopfes eine höhere Kraft aufgewendet werden muss als zum Festziehen. Die Sicherheit gegen ein ungewolltes Lösen ist vergleichsweise gering.

Die WO-A-02/061325 offenbart ein Verteilergehäuse einer Wasserleitung, die mehrere Anschlüsse für jeweils eine Abzweigleitung aufweist. Die Anschlüsse besitzen jeweils ein Adapterstück, das mit einer Überwurfmutter festlegbar ist.

Die FR-A-917 287 offenbart eine Kupplung an einer pneumatischen Leitung. Diese weist eine Flügelmutter auf, die mit einer Hülse gegen ein Lösen gesichert ist. Die Hülse besitzt achsial vorragende Zähne, in welche die Flügel der Flügelmutter eingreifen. Zum Lösen wird die Hülse gegen die rückwirkende Kraft einer Spiralfeder verschoben.

Der Erfindung liegt die Aufgabe zugrunde, eine Verbindung der genannten Art zu schaffen, welche einfacher lösbar und dennoch sicher ist.

Die Erfindung ist bei einer gattungsgemässen Schraubverbindung gemäss Anspruch 1 gelöst. Bei der erfindungsgemässen Schraubverbindung muss lediglich die Kraft aufgebracht werden, die notwendig ist, um die Dichtigkeit zwischen dem Anschlussstutzen und dem Anschlussteil zu gewährleisten. Die bisher übliche vergleichsweise hohe Kraft zur Sicherung der Überwurfmutter ist nicht erforderlich, da diese durch das genannte Sicherungsmittel festgelegt wird und sich deshalb nicht lösen kann. Das Sicherungsmittel arbeitet selbsttätig, d.h. beim Anziehen der Überwurfmutter wird diese selbsttätig gegen ein Lösen gesichert. Die erfindungsgemässe Schraubverbindung kann damit jedenfalls ohne Werkzeug montiert werden. Insbesondere ist damit auch eine sogenannte verdeckte Montage möglich, bei welcher die Überwurfmutter nicht sichtbar ist. Solche verdeckten Montagen sind insbesondere in der Sanitärtechnik vergleichsweise häufig.

Das Sicherungsmittel ist als Ring ausgebildet, der drehfest auf den Anschlussstutzen aufgesetzt ist und an dem die Überwurfmutter lösbar festgelegt ist. Diese ermöglicht eine besonders kostengünstige und funktionssichere Ausbildung.

Das Sicherungsmittel Rastmittel auf, welche die Überwurfmutter in angezogener Stellung festlegen. In der angezogenen Stellung ist die Überwurfmutter in einer Rastposition, in welcher sie nicht mehr gelöst werden kann. Dies ermöglicht eine besonders sichere und formschlüssige Sicherung der Überwurfmutter.

Nach einer Weiterbildung der Erfindung weist die Überwurfmutter aussenseitig Rippen auf, die mit dem Sicherungsmittel rastbar sind. Diese Rippen der Überwurfmutter sind gleichzeitig Greifmittel, welche ein Anziehen der Überwurfmutter ermöglichen. Diese Rippen haben somit zwei Funktionen und ermöglichen eine besonders kostengünstige Herstellung.

Nach einer Weiterbildung der Erfindung ist vorgesehen, dass die Sicherungsmittel eine Auflaufebene aufweisen, an welcher die Rippen der Überwurfmutter in die Raststellung geführt werden.

Das Sicherungsmittel weist einen Nocken aufweist, der federelastisch auslenkbar und radial an einer vorstehenden Zunge angeformt ist. Dies ermöglich eine besonders einfache und lösbare Verbindung. Zum Lösen der Verbindung wird die Zunge beispielsweise nach hinten federelastisch ausgelenkt und damit der Nocken entrastet.

Weitere vorteilhafte Merkmale ergeben sich aus den abhängigen Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht einer erfindungsgemässen Verbindung mit einem Verteilergehäuse,
- Figur 2: ein Schnitt entlang der Linie II-II der Figur 4,
- Figur 3: ein Schnitt entlang der Linie III-III der Figur 2,
- Figur 4: eine Ansicht der Verbindung und
- Figur 5: ein Schnitt entlang der Linie V-V der Figur 4.

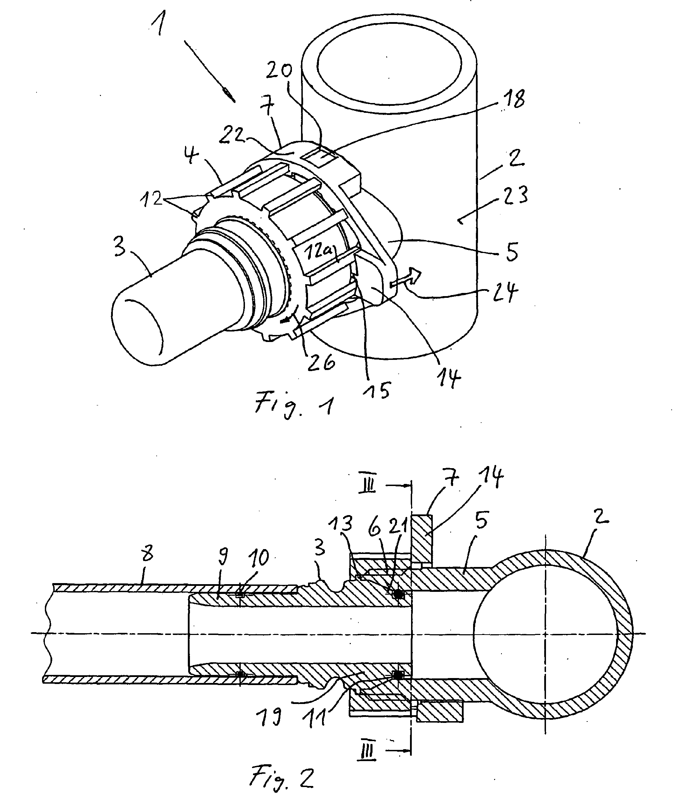

Die in den Figuren 1 und 2 gezeigte Schraubverbindung 1 weist ein Gehäuse 2 auf, das an hier nicht gezeigte Rohrleitungen anzuschliessen und axial von einem Medium, insbesondere einer Flüssigkeit durchströmt wird. Am Gehäuse 2 ist ein radial nach aussen gerichteter Anschlussstutzen 5 angeformt, der eine sich nach aussen erweiternde konische Fläche 21 aufweist, in die ein Anschlussteil 3 eingreift. Am Gehäuse 2, das insbesondere ein Verteilergehäuse ist, können auch mehrere Anschlussstutzen 5 angeformt sein. Der Anschlussteil 3 besitzt einen ersten Stutzen 19, in den ein Dichtungsring 11 eingelegt ist, welcher den Anschlussteil 3 gegenüber dem Anschlussstutzen 5 abdichtet. Im Abstand zu diesem Dichtungsring 11 ist am Anschlussteil 3 ein radial nach aussen gerichteter Flansch 13 angeformt, der mit einer Überwurfmutter 4 an einer Stirnseite des Anschlussstutzens 5 angepresst wird.

Der Anschlussteil 3 besitzt einen zweiten Stutzen 9, in den ebenfalls ein Dichtungsring 10 eingelegt ist und auf den ein Leitungsrohr 8 aufgesetzt ist. Das Leitungsrohr 8 ist am zweiten Stutzen 9 fixiert, beispielsweise durch Verpressen des Leitungsrohres 8 auf den zweiten Stutzen 9. Die Verbindung zwischen dem Leitungsrohr 8 und dem zweiten Stutzen 9 kann an sich unterschiedlich ausgebildet sein, beispielsweise könnte das Leitungsrohr 8 auch am zweiten Stutzen 9 verrastet oder aufgeschraubt sein. Möglich ist auch ein Verpressen mit einer hier nicht gezeigten Presshülse.

Der Anschlussstutzen 5 weist an seinem freien Ende ein aussenseitiges Schraubgewinde 6 auf, auf welches die Überwurfmutter 4 aufgeschraubt ist. Wie bereits erwähnt, wird dadurch der Anschlussteil 3 mittels des Flansches 13 axial und dicht am Anschlussstutzen 5 festgelegt.

Auf den Anschlussstützen 5 ist ein Sicherungsmittel 7 aufgesetzt, das ringförmig ausgebildet ist und einen Ansatz 22 besitzt, welcher eine Ausnehmung 20 aufweist, in die von unten ein Rastnocken 18 eingreift. Der Rastnocken 18 ist am Anschlussstutzen 5 angeformt und greift in die Ausnehmung 20 ein. Das Sicherungsmittel 7 ist damit drehsicher auf dem Anschlussstutzen 5 festgelegt. Der Anschlag 22 liegt zudem axial an der Aussenseite 23 des Gehäuses 2 an.

Das Sicherungsmittel 7 ist ein separat hergestelltes Teil, insbesondere ein Spritzgussteil. Bei der Montage wird das Sicherungsteil 7 auf den Stutzen 5 aufgesetzt und wird selbsttätig wie oben erläutert durch den Nocken 18 verrastet. Der Nocken 18 kann hierbei federelastisch ausgebildet sein. Möglich ist ein lösbarer als auch unlösbarer Rasteingriff.

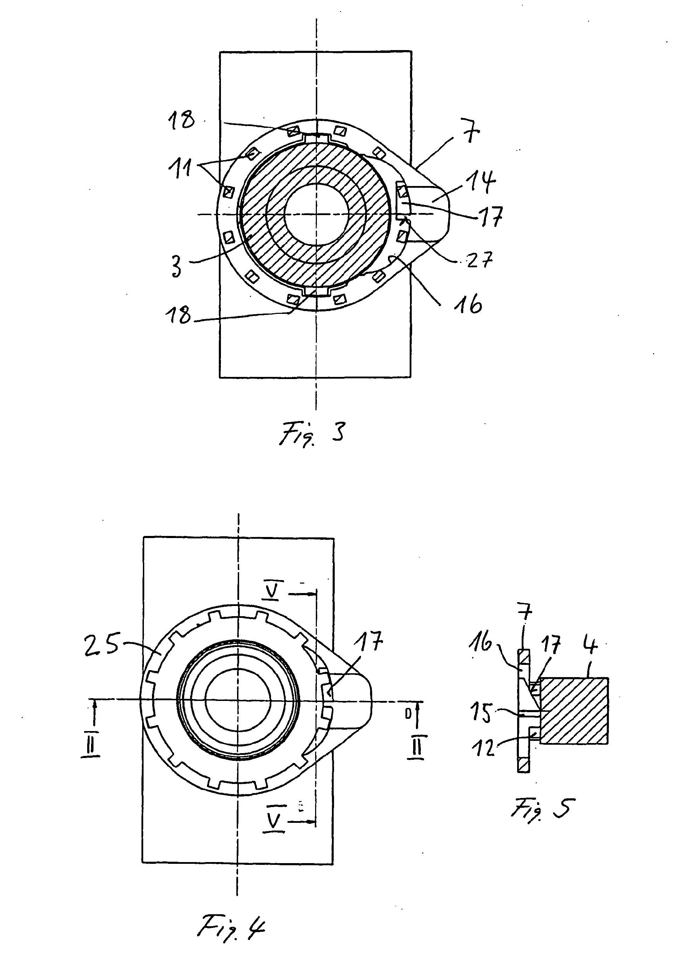

Das Sicherungsmittel 7 weist eine radial nach aussen vorstehende Zunge 14 auf, die einen Rastnocken 15 mit einer Auflauffläche 17 (Figur 5) besitzt. Am Grunde der Zunge 7 ist eine Ausnehmung 16 eingearbeitet, die es ermöglicht, die Zunge 14 gemäss Figur 1 in Richtung des Pfeiles 24 nach hinten zu biegen. Entsprechend wird der Nocken 15 bei einem solchen federelastischen Umbiegen der Zunge 14 nach hinten bewegt. In der Ruhestellung befindet sich der Nocken 15 im Wesentlichen in der Ebene einer Frontseite 25 des Sicherungsmittels 7. In den Figuren 1 und 2 ist die Zunge 14 in der Ruhestellung gezeigt. Das genannte Auslenken der Zunge 14 kann von Hand erfolgen.

Die Überwurfmutter 4 weist an ihrem Umfang eine Mehrzahl von Rippen 12 auf, die sich axial erstrecken. Die Rippen 12 bilden Griffmittel, die ein Anziehen der Überwurfmutter 4 mit Hand erleichtern. Gleichzeitig sind diese Rippen 12 Rastmittel, welche mit dem Nocken 15 zusammenarbeiten. Die Überwurfmutter 4 wird in der Figur 1 in Richtung des Pfeils 26 angezogen. Grundsätzlich ist auch ein Gewinde möglich, bei welchem die Überwurfmutter 4 im Gegenuhrzeigersinn angezogen wird. Beim Anziehen der Überwurfmutter 4 bleibt das Sicherungsmittel 7 in der gezeigten Stellung, da dieses durch den Nocken 18 fixiert ist. Der Nocken 15 wird somit beim Anziehen der Überwurfmutter 4 in Umfangsrichtung nicht bewegt. Wird nun die Rippe 12a beim Drehen der Überwurfmutter 4 in Richtung des Pfeiles 26 in Umfangsrichtung gedreht, so gelangt ein vorderes Ende der Rippe 12a auf die Auflauffläche 17 des Nockens 15 und lenkt dadurch die Zunge 14 in Richtung des Pfeiles 24 federelastisch aus. Wird die Überwurfmutter 4 weitergedreht, so gelangt die Rippe 12a hinter den Nocken 15 und die dadurch entlastete Zunge 14 schnellt wieder in die in Figur 1 gezeigte Grundstellung zurück.

Der Nocken 15 besitzt nun auf der Rückseite der Auflauffläche 17 eine Anschlagfläche 27, die sich axial erstreckt und hinter welcher nun die Rippe 12a eingerastet ist. Eine Drehbewegung der Überwurfmutter 4 in Gegenrichtung, d.h. in Gegenrichtung des Pfeiles 26 ist nicht mehr möglich, da die eingerastete Rippe 12a an der Anschlagfläche 27 anliegt.

Ist die Überwurfmutter 4 noch nicht hinreichend angezogen um eine Dichtigkeit zu gewährleisten, wird diese weiter in Richtung des Pfeiles 26 gedreht, wobei auch die nachfolgenden Rippen 12 wie oben erläutert jeweils die Zunge 14 auslenken und anschliessend einrasten. Kann die Überwurfmutter 4 von Hand nicht weiter angezogen werden, so ist die gewünschte Stellung erreicht. Die Überwurfmutter 4 kommt somit kurz vor Erreichen der Endstellung in Eingriff mit dem Sicherungsmittel 7 bzw. dem Nocken 15.

Wie erläutert, ist ein Lösen der Überwurfmutter 4 nicht möglich, da die Zunge 14 eine der Rippen 12 und damit die Überwurfmutter 4 an einer Drehung im Gegenuhrzeigersinn verhindert. Soll nun die Überwurfmutter 4 gelöst werden, so wird die radial vorstehende Zunge 14 von Hand in Richtung des Pfeiles 24 federelastisch nach hinten gebogen, sodass entsprechend der Nocken 15 sich hinter der Ebene der Frontfläche 25 befindet. Wird die Zunge 14 losgelassen, so geht sie selbsttätig wieder in die Ruhestellung zurück, in welcher die Überwurfmutter 14 gegen ein Verdrehen bzw. gegen ein Lösen gesichert ist. Die Festlegung der Überwurfmutter 4 an der Zunge 14 bzw. am Nocken 15 ist formschlüssig und ein Lösen wäre nur mit der Aufwendung vergleichsweise Kräfte möglich. Auf jeden Fall kann ein selbsttätiges Lösen, beispielsweise durch Vibration nicht erwartet werden.

Nachfolgend wird die Montage der erfindungsgemässen Schraubverbindung näher erläutert.

Das Sicherungsmittel 7 ist am Gehäuse 2 vorzugsweise vormontiert. Zur Vormontage braucht lediglich das Sicherungsmittel 7 auf den Anschlussstutzen 5 aufgesetzt zu werden. Um das Leitungsrohr 8 am Gehäuse 2 anzuschliessen, wird der Anschlussteil 3 in die Überwurfmutter 4 eingesetzt. Die Überwurfmutter 4 wird nun mit dem eingesetzten Anschlussteil 3 auf den Anschlussstutzen 5 aufgeschraubt. Ist die Überwurfmutter 4 fast vollständig aufgeschraubt, so kommen die Rippen 4 in Eingriff mit dem Nocken 15 und dieser wird wie oben erläutert durch jede auf die Auflauffläche 17 auffahrende Rippe 12 bzw. 12a ausgelenkt. Diese Auslenkung erfolgt selbsttätig. Ein Werkzeug ist nicht erforderlich. Ist die Überwurfmutter vollständig aufgeschraubt, so wird sie durch die zuletzt aufgerastete Rippe fixiert. Schliesslich wird das Leitungsrohr 8 am zweiten Stutzen 9 fixiert, beispielsweise mit einer hier nicht gezeigten üblichen Zange verpresst. Sollte die Verbindung nicht dicht sein, so kann die Überwurfmutter 4 wie oben erwähnt gelöst werden, indem die Zunge 14 in der Richtung des Pfeiles 24 ausgelenkt wird. Nach der notwendigen Änderung, beispielsweise einem Ersetzen des Dichtungsringes 11, kann die Überwurfmutter 4 wie oben erläutert wieder aufgeschraubt werden. Es ist auch ein wiederholtes Lösen und Anziehen möglich.

Trotz der genannten erheblichen Vorteile kann die Verbindung aus wenigen und robusten Teilen hergestellt werden. Die Verbindung eignet sich insbesondere zum Herstellen einer Rohrverbindung, insbesondere einer Rohrverbindung an einem Abzweigstutzen eines Gehäuses, insbesondere eines Verteilergehäuses.

### Bezugszeichenliste

- 1.: Schraubverbindung
- 2.: Gehäuse
- 3.: Anschlussteil
- 4.: Überwurfmutter
- 5.: Anschlussstutzen
- 6.: Gewinde
- 7.: Sicherungsmittel
- 8.: Leitungsrohr
- 9.: Stutzen
- 10.: Dichtungsring
- 11.: Dichtungsring
- 12.: Rippen
12a Rippen
- 13: Flansch
- 14.: Zunge
- 15.: Nocken
- 16.: Ausnehmung
- 17.: Anlauffläche
- 18.: Rastnocken
- 19.: Stutzen
- 20.: Ausnehmung
- 21.: Konische Fläche
- 22.: Ansatz
- 23.: Aussenseite
- 24.: Pfeil
- 25.: Frontseite
- 26.: Pfeil
- 27.: Anschlagfläche

## Patentansprüche

1. Schraubverbindung zwischen einem Gehäuse (2), insbesondere einem Verteilergehäuse und einem Anschlussteil (3), mit einer Überwurfmutter (4), in welche der Anschlussteil (3) eingesetzt ist und die auf einen Anschlussstutzen (5) mit aussenseitigem Gewinde (6) aufgeschraubt ist, wobei zwischen der Überwurfmutter (4) und dem Gehäuse (2) ein Sicherungsmittel (7) angeordnet ist, das die Überwurfmutter (4) gegen ein Lösen sichert, wobei das Sicherungsmittel (7) so ausgebildet ist, dass es die Überwurfmutter (4) beim Anziehen selbsttätig sichert und das Sicherungsmittel (7) Rastmittel (15) aufweist, welche die Überwurfmutter (4) in angezogener Position festlegen und die Rastmittel (15) des Sicherungsmittels (7) wenigstens einen Nocken aufweisen, **dadurch gekennzeichnet, dass** das Sicherungsmittel (7) als Ring ausgebildet ist, der drehfest auf den Anschlussstutzen (5) aufgesetzt ist und an dem die Überwurfmutter (4) lösbar festgelegt ist, und dass der Nocken (15) zum Lösen der Überwurfmutter (4) an einer achsial zum Anschlussteil (3) federelastisch auslenkbaren und radial über die Überwurfmutter hinausragenden Zunge (14) angeordnet ist.

2. Verbindung nach Anspruch 1, **dadurch gekennzeichnet, dass** der Nocken (15) die angezogene Überwurfmutter (4) an aussenseitigen Rippen (12) dieser Überwurfmutter (4) formschlüssig festlegt, insbesondere verrastet.

3. Verbindung nach Anspruch 1 oder 2, **dadurch gekennzeichnet, dass** der Nocken (15) eine schräge Auflaufebene (17) aufweist.

4. Verbindung nach einem der Ansprüche 1 bis 3, **dadurch gekennzeichnet, dass** der Anschlussstutzen (5) verbindungsmittel (18) aufweist, mit denen das Sicherungsmittel (7) verdrehfest am Anschlussstutzen (5) befestigt ist.

5. Verbindung nach einem der Ansprüche 1 bis 4, **dadurch gekennzeichnet, dass** die Überwurfmutter (4) an ihrem Umfang eine Mehrzahl von Rippen oder Zähne (12) aufweist, die beim Anziehen der Überwurfmutter (4) kurz vor der Endposition mit dem Sicherungsmittel (7) zur genannten Verdrehsicherung zusammenarbeiten.

6. Verbindung nach Anspruch 5, **dadurch gekennzeichnet, dass** die Rippen (12) gleichzeitig Greifmittel sind, an denen die Überwurfmutter (4) auf den Anschlussstutzen (5) aufschraubbar und anziehbar ist.

7. Verbindung nach einem der Ansprüche 1 bis 6, **dadurch gekennzeichnet, dass** das Sicherungsmittel (7) ein separat hergestelltes oder angeformtes Teil, insbesondere Spritzgussteil ist.

8. Verbindung nach einem der Ansprüche 1 bis 7, **dadurch gekennzeichnet, dass** das Gehäuse ein Verteilergehäuse einer Wasserleitung ist.

## Claims

1. Screw connection between a housing (2), in particular a junction housing, and a connector part (3), with a clamping nut (4) in which the connector part (3) is inserted and which is screwed onto a spigot (5) with an external thread (6), a fixing means (7) being provided between the clamping nut (4) and the housing (2) which secures the clamping nut (4) to prevent it from working loose, which fixing means (7) is designed so that it automatically secures the clamping nut (4) as it is screwed on and the fixing means (7) has a latch means (15) which fixes the clamping nut (4) in the tightened position, and the latch means (15) of the fixing means (7) has at least one cam, **characterised in that** the fixing means (7) is provided in the form of a ring which is fitted on the spigot (5) so that it is prevented from turning and is releasably fixed on the clamping nut (4), and the cam (15) for loosening the clamping nut (4) is disposed on a tongue (14) which can be elastically deflected axially with respect to the connector part (3) and is disposed projecting radially beyond the clamping nut.

2. Connection as claimed in claim 1, **characterised in that** the cam (15) positively secures, in particular latches, the tightened clamping nut (4) on ribs (12) on the external face of this clamping nut (4).

3. Connection as claimed in claim 1 or 2, **characterised in that** the cam (15) has an oblique contact plane (17).

4. Connection as claimed in one of claims 1 to 3, **characterised in that** the spigot (5) has connecting means (18) by means of which the fixing means (7) is affixed to the spigot (5) -to prevent it from turning.

5. Connection as claimed in one of claims 1 to 4, **characterised in that** the clamping nut (4) has a plurality of ribs or teeth (12) on its circumference, which co-operate with the, fixing means (7) to form said rotation anti-lock shortly before the end position as the clamping nut (4) is tightened.

6. Connection as claimed in claim 5, **characterised in that** the ribs (12) simultaneously serve as gripping means, by which the clamping nut (4) can be screwed onto the spigot (5).

7. Connection as claimed in one of claims 1 to 6, **characterised in that** the fixing means (7) is a separately manufactured or integrally formed part, in particular an injection-moulded part.

8. Connection as claimed in one of claims 1 to 7, **characterised in that** the housing is a junction housing of a water pipe.

## Revendications

1. Connexion à vis entre une boîte (2), notamment une boîte de distribution, et un élément de jonction (3), comprenant un écrou d'accouplement (4) dans lequel l'élément de jonction (3) est inséré et qui est vissé sur un raccord (5) avec un filetage extérieur (6), entre l'écrou d'accouplement (4) et la boîte (2) étant disposé un moyen de fixation (7) qui empêche l'écrou d'accouplement (4) de se desserrer, le moyen de fixation (7) étant réalisé de telle sorte qu'il fixe automatiquement l'écrou d'accouplement (4) lors du vissage et le moyen de fixation (7) présente des moyens d'encliquetage (15) qui fixent l'écrou d'accouplement (4) dans la position vissée et les moyens d'encliquetage (15) du moyen de fixation (7) présentent au moins une came, **caractérisée en ce que** le moyen de fixation (7) est réalisé sous la forme d'une bague, qui est posée de manière fixe en rotation sur le raccord (5) et sur laquelle est fixé l'écrou d'accouplement (4) de manière desserrable, et **en ce que** la came (15) est disposée pour desserrer l'écrou d'accouplement (4) sur une langue (14) pouvant être déviée de manière élastique axialement par rapport à l'élément de jonction (3) et saillant radialement au-delà de l'écrou d'accouplement.

2. Connexion selon la revendication 1, **caractérisée en ce que** la came (15) fixe par engagement positif, notamment par encliquetage, l'écrou d'accouplement (4) vissé, au niveau de nervures extérieures (12) de cet écrou d'accouplement (4).

3. Connexion selon la revendication 1 ou 2, **caractérisée en ce que** la came (15) présente un plan d'amené oblique (17).

4. Connexion selon l'une quelconque des revendications 1 à 3, **caractérisée en ce que** le raccord (5) présente des moyens de connexion (18) avec lesquels le moyen de fixation (7) est fixé de manière fixe en rotation sur le raccord (5).

5. Connexion selon l'une quelconque des revendications 1 à 4, **caractérisée en ce que** l'écrou d'accouplement (4) présente sur sa périphérie une pluralité de nervures ou de dents (12) qui coopèrent lors du vissage de l'écrou d'accouplement (4) juste avant la position finale avec le moyen de fixation (7) en vue de la fixation citée contre la rotation.

6. Connexion selon la revendication 5, **caractérisée en ce que** les nervures (12) sont en même temps des moyens de préhension, sur lesquels l'écrou d'accouplement (4) peut être vissé et serré sur le raccord (5).

7. Connexion selon l'une quelconque des revendications 1 à 6, **caractérisée en ce que** le moyen de fixation (7) est un élément fabriqué séparément ou moulé par-dessus, notamment une pièce moulée par injection.

8. Connexion selon l'une quelconque des revendications 1 à 7, **caractérisée en ce que** la boîte est une boîte de distribution d'une conduite d'eau.
